# EUROPÄISCHE PATENTSCHRIFT

(11) **EP 3 797 858 B1**
(45) Veröffentlichungstag und Bekanntmachung des Hinweises auf die Patenterteilung: **20.04.2022**
(21) Anmeldenummer: 20193261.3
(22) Anmeldetag: 28.08.2020
(51) Int. Cl.: B01D 65/02, B01D 67/00, B01D 69/08, D01D 5/24, D01D 10/06, B65H 57/14

(54) **VORRICHTUNG ZUM SPÜLEN ODER IMPRÄGNIEREN EINER MEMBRANFASER**
DEVICE FOR RINSING OR IMPREGNATING A MEMBRANE FIBRE
DISPOSITIF DE RINÇAGE OU D'IMPRÉGNATION D'UNE FIBRE MEMBRANAIRE

(30) Priorität: 30.09.2019 DE 102019126315
(43) Veröffentlichungstag der Anmeldung: 31.03.2021
(73) Patentinhaber: qCoat GmbH, 04277 Leipzig (DE)
(72) Erfinder: Schulze, Agnes, 04155 Leipzig (DE); Hinkefuß, Manfred, 04157 Leipzig (DE); Drößler, Lutz, 04347 Leipzig (DE)
(74) Vertreter: Findeisen Neumann Scheit Partnerschaft mbB

(56) Entgegenhaltungen:
- EP-A1- 2 583 745
- EP-A1- 2 633 900
- EP-A1- 2 703 068
- WO-A1-2014/104124
- WO-A1-2017/001260
- JP-A- H0 957 078
- US-A1- 2014 163 124

## Beschreibung

### Technologischer Hintergrund

Membranfasern, wie beispielsweise Hohlfasermembranen, haben in den letzten Jahren eine stetig wachsende Bedeutung für verschiedene Anwendungen, wie z. B. in der Hämodialyse, Trinkwasser- und Abwasser Aufreinigung, Sterilfiltration oder in der Getränkeproduktion erlangt. Die Vielzahl unterschiedlicher Anwendungen erfordert eine spezifische Anpassung der Polymermembranen, um Fouling zu reduzieren/zu verhindern, um katalytisch aktive Membranoberflächen zu generieren, oder um eine stabile und hohe Membranleistung zu erwirken.

Eine solche Behandlung der Membranfaser kann beispielsweise derart erfolgen, dass die Polymermembran von einer ersten Rolle auf eine zweite Rolle gezogen wird und dabei ein oder mehrere Flüssigkeitsbäder durchläuft, die mit den zur Behandlung vorgesehenen Medien befüllt sind (sogenannte Rolle-zu-Rolle-Modifizierung). Umlenkrollen ermöglichen dabei eine Richtungsänderung und den Fasertransport von empfindlichen/dünnen/wenig stabilen Membranfasermaterialien auf einer kontinuierlichen Anlage. Die Umlenkrollen rotieren dafür um ihre Achse und führen so eine Membranfaser durch ein Spül-/Imprägnierbad. Um empfindliches Bahnmaterial zu transportieren, können diese Umlenkrollen auch aktiv angetrieben werden. Somit können Membranfasern mit möglichst niedriger Zugspannung über die gesamte Anlage gezogen werden.

Bei konventionellen Anlagen erfordert das Imprägnieren und Spülen der Membranfasern lange Verweilzeiten in den Bädern, um den effektiven Stoffaustausch im Membranmaterial während des passiven Durchziehens durch das Bad zu erreichen. Dazu werden die Fasern entsprechend durch sehr lange Bäder mit großen Volumina gezogen, um die Poren möglichst vollständig zu imprägnieren/spülen. Im Falle einer Membranfaserdicke von 150 µm wären beispielsweise Verweilzeiten von 5 - 20 Minuten, in einem Bad von ca. 200 - 400 L Volumen nötig, wenn man von einer recht langsamen Prozess-Geschwindigkeit von 1 m/min ausgeht (bei höheren Geschwindigkeiten benötigt man entsprechend größere Volumina, um die Verweilzeit zu realisieren). Am Beispiel einer Anlage mit vier Bädern bedeutet dies eine Verweilzeit von 20 - 80 Minuten, in Volumina von 800 - 1.600 L mit entsprechend kostenintensivem Einsatz von Chemikalien und anschließender Entsorgung sowie viel Platz für die entsprechenden Tanks.

Da das Membranmaterial nur passiv durch die Bäder gezogen wird, ist der Stoffaustausch nie vollständig und beim Entfernen von toxischen Chemikalienresten müssen mehrere Bäder hintereinander durchfahren werden, um möglichst effizient zu spülen. Dennoch sind in kommerziellen Membranfasern nach wie vor Chemikalienrückstände nachweisbar, welche insbesondere bei der Verwendung der Membranfasern im medizinischen Bereich oder der Nahrungsmittelproduktion höchst problematisch sind.

Außerdem erzeugen bewegliche Umlenkrollen im Prozess auf Dauer immer Abrieb und der Eintrag von Schmiermitteln in das System (also auf das Membranmaterial) kann nicht vollständig ausgeschlossen werden. EP 2 633 900 A1, WO 2017/001260 und US2014/163124 beschreiben Vorrichtungen zum Waschen oder Spülen von Hohlfasermembranen unter Verwendung von Umlenkrollen.

### Zusammenfassung der Erfindung

Ein oder mehrere Nachteile des Standes der Technik werden mit Hilfe der Vorrichtung nach Anspruch 1 gelöst oder zumindest gemindert. Die erfindungsgemäße Vorrichtung zum Spülen oder Imprägnieren einer Membranfaser, umfasst hierzu
- eine Umlenkeinheit, die eine hohle Gewindespindel mit einer Gewindenut umfasst, wobei die Gewindenut mindestens eine Windung und Bohrungen im Gewinderillengrund der Gewindenut aufweist;
- Mittel zum Führen der Membranfaser über die Gewindenut der Umlenkeinheit, die eine erste Umlenkwalze und eine zweite Umlenkwalze umfassen, wobei die Umlenkeinheit derart zwischen der ersten Umlenkwalze und der zweiten Umlenkwalze angeordnet ist, dass die Membranfaser an der Umlenkeinheit umlenkbar ist; und
- eine Pumpvorrichtung, die an einen Zulaufanschluss an der Umlenkeinheit angeschlossen ist und dazu ausgelegt ist eine Flüssigkeit in die hohle Gewindespindel und durch die Bohrungen in der Gewindenut zu leiten.

Die Vorrichtung ist somit derart ausgelegt, dass eine von der Pumpvorrichtung geförderte Flüssigkeit in die hohle Gewindespindel der Umlenkeinheit gepumpt wird und durch die Bohrungen im Gewinderillengrund wieder aus der Umlenkeinheit austritt. In der Gewindenut bildet sich infolgedessen ein dünner Flüssigkeitsfilm, auf dem die Membranfaser beim (teilweisen) Umlaufen der Umlenkeinheit gleitet und somit umgelenkt und von der Flüssigkeit durchströmt wird.

Die erfindungsgemäße Vorrichtung ermöglicht somit ein aktives Durchspülen der Membranfaser und vermeidet zudem den direkten Kontakt zwischen der Umlenkeinheit und der Membranfaser durch die Ausbildung dieses dünnen Flüssigkeitsfilms im Gewinderillengrund der Gewindenut, auf welchem die Membranfaser gleitet. Somit können insbesondere auch empfindliche Membranfasern durch eine kontinuierliche Anlage geführt und gleichzeitig aktiv gespült oder imprägniert werden.

Die erfindungsgemäße Vorrichtung ermöglicht zudem eine erhebliche Verkürzung der Prozesszeit sowie die Reduzierung der Menge an Chemikalien und Lösungsmitteln für den Spül- oder Imprägnierprozess, da deutlich kleinere Spülbäder verwendet werden können.

Bei herkömmlichen Anlagen zum Spülen oder Imprägnieren von Membranfasern entsteht durch den Einsatz einer beweglichen Umlenkrolle immer Abrieb und es kann zu einem Eintrag von Schmiermittel ins System kommen, was zur Kontaminierung der Membranfaser führen kann. Das kann mit der erfindungsgemäßen Vorrichtung vermieden werden.

Nach einer Ausführungsform umfasst die Vorrichtung einen Spülbehälter, wobei die Umlenkeinheit in dem Spülbehälter angeordnet ist. Die Umlenkeinheit kann im Spülbehälter lösbar montiert sein.

Gemäß einer weiteren Ausführungsform umfasst die Vorrichtung einen nach oben stehenden Griff, der an der Umlenkeinheit montiert ist.

Die Gewindenut kann eine Gewindenutbreite von 30µm bis 1cm aufweisen. Zudem kann die Gewindenut eine Gewindenuttiefe von 30µm bis 1cm aufweisen.

Vorzugsweise ist die Gewindenut eine Gewindeart ausgewählt aus Spitzgewinde, Trapezgewinde, Flachgewinde, Sägegewinde und Rundgewinde.

In einer weiteren Ausführungsform kann die hohle Gewindespindel mindestens zwei Gewindenuten mit jeweils unterschiedlichen Gewindenutbreiten und/oder Gewindenuttiefen aufweisen.

Bevorzugter Weise ist die Pumpvorrichtung regelbar.

Alle weiteren Ausführungsformen und Spezifikationen können der detaillierten Beschreibung und den nachfolgend beschrieben Figuren entnommen werden.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1: eine Vorrichtung zum Spülen oder Imprägnieren einer Membranfaser gemäß einer Ausführungsform der Erfindung;
- Fig. 2: einen Querschnitt durch die Vorrichtung aus Figur 1;
- Fig.3: eine Detailansicht einer Umlenkeinheit, welche in der in Figur 1 dargestellten Vorrichtung eingesetzt wird;
- Fig.4: ein Längsschnitt durch die Umlenkeinheit aus Figur 3; und
- Fig. 5: einen schematischen Querschnitt durch die Umlenkeinheit aus Figur 3 während des Spülvorgangs.

### Detaillierte Beschreibung der Erfindung

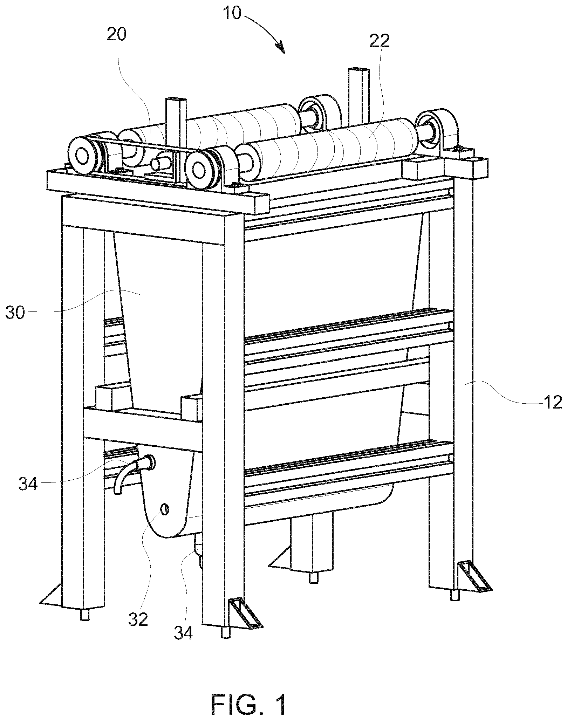

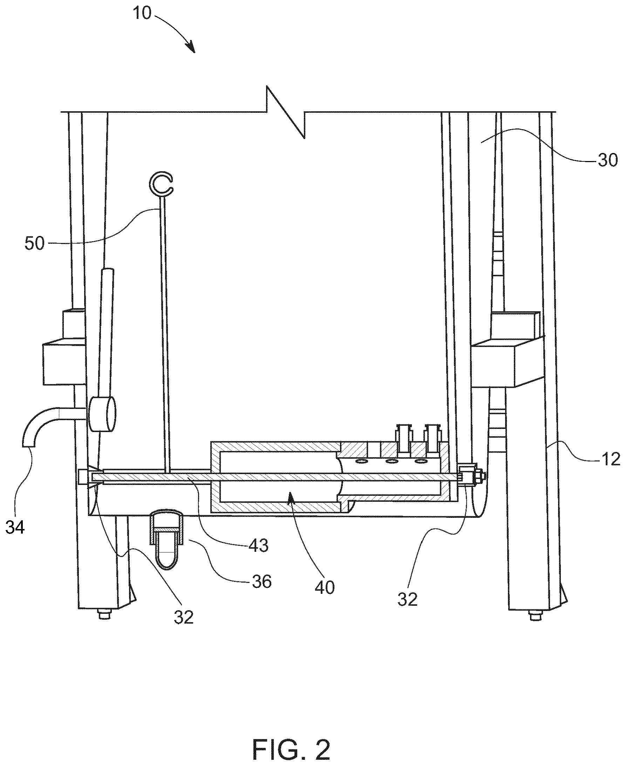

Die Figuren 1 und 2 zeigen eine Vorrichtung 10 zum Spülen oder Imprägnieren einer Membranfaser gemäß einer Ausführungsform der Erfindung. Die Vorrichtung 10 kann Teil einer komplexen Fertigungsanlage für Hohlfasermembranen sein und als Modul in eine solche integriert werden.

Die hier exemplarisch dargestellte Vorrichtung 10 weist Mittel zum Führen einer Membranfaser auf. Diese Mittel umfassen eine erste Umlenkwalze 20 und eine zweite Umlenkwalze 22, die in einem oberen Bereich eines Gestells 12 der Vorrichtung 10 rotierbar montiert sind und der Umlenkung der Membranfaser in einen weiter unten montierten Spülbehälter 30 dienen. Die Rotation der Umlenkwalzen 20, 22 kann aktiv oder passiv erfolgen. Im ersteren Fall können die Umlenkwalzen 20, 22 an eine Antriebseinheit angeschlossen (z. B. einen Elektromotor) oder mit einer Handkurbel bedient werden. Im passiven Betrieb ist die Vorrichtung 10 Teil einer Fertigungsanlage, die Mittel zur Bewegung der Membranfaser umfasst.

Der Spülbehälter 30 ist ebenfalls am Gestell 12 der Vorrichtung 10 befestigt und kann beispielweise aus Edelstahl bestehen. In der in den Figuren 1 und 2 dargestellten Ausführungsform ist der Spülbehälter 30 als eine tiefgezogene Wanne ausgeführt. Eine im Folgenden noch näher erläuterte Umlenkeinheit 40 ist über eine Zentrieraufnahme 32 im Bodenbereich des Spülbehälters 30 im Betrieb feststehend, d. h. nicht rotierend, aber wieder lösbar montiert. Der Spülbehälter 30 umfasst ferner einen Überlauf 34, der sich oberhalb der Umlenkeinheit 40 befindet, und einen Ablauf 36 am Boden des Spülbehälters 30.

In der dargestellten Ausführungsform der Figur 2 ist die Umlenkeinheit 40 über eine Aufhängung 43 der Umlenkeinheit 40 an der Zentrieraufnahme 32 im Bodenbereich des Spülbehälters 30 befestigt. Zudem ist an der Aufhängung 43 der Umlenkeinheit 40 ein Griff 50 befestigt. Der Griff 50 soll das Einfädeln der Membranfaser 100 und die Montage der Umlenkeinheit 40 an der Zentrieraufnahme 32 erleichtern. Die reversible Montage der Umlenkeinheit 40 erleichtert das Einfädeln der Membranfaser 100 in die Vorrichtung 10 sowie die Wartung der Vorrichtung 10, insbesondere der Umlenkeinheit 40. Die Umlenkeinheit 40 ist derart montiert, dass die Umlenkeinheit 40 nicht um ihre eigene Achse rotiert. Das Umlenken der Membranfaser 100 an der Umlenkeinheit 40 basiert auf der Ausbildung eines Flüssigkeitsfilms im Gewinderillengrund und setzt daher keine freie Drehlagerung der Umlenkeinheit 40 voraus. Dies hat den Vorteil, dass Abrieb des Membranfasermaterials sowie die Kontamination der Membranfaser 100 durch Schmiermittel im Umlenkbereich vermieden werden können.

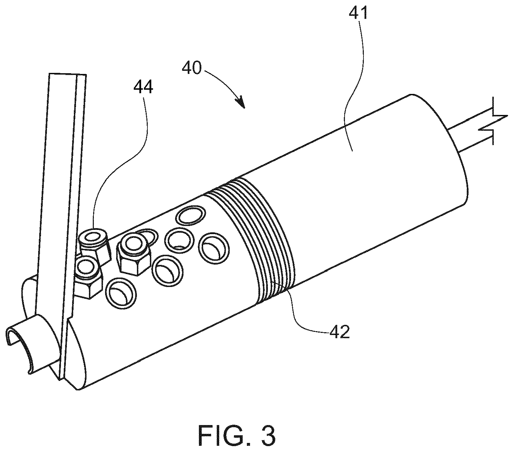

Den Figuren 3 bis 5 ist die Umlenkeinheit 40 der hier dargestellten Ausführungsform der Vorrichtung 10 zu entnehmen. Die Umlenkeinheit 40 ist so zwischen der ersten Umlenkwalze 20 und der zweiten Umlenkwalze 22 angeordnet, dass die Membranfaser 100 an der Umlenkeinheit 40 umgelenkt wird, wenn sich die Umlenkeinheit 40 in der Zentrieraufnahme 32 befindet. Die hohle Gewindespindel 41 der Umlenkeinheit 40 weist eine (äußere) Gewindenut 42 auf, in deren Gewinderillengrund durchgängige Bohrungen 48 in den Innenraum 46 der Umlenkeinheit 40 reichen.

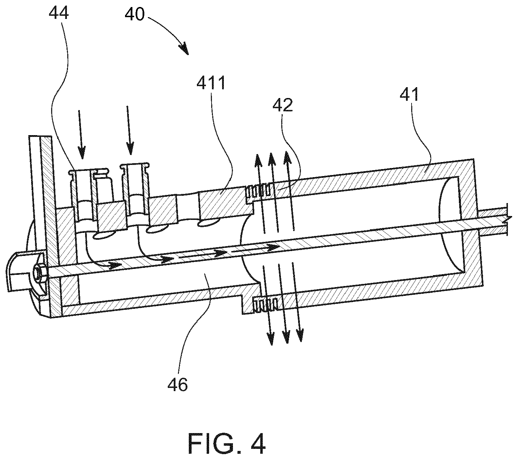

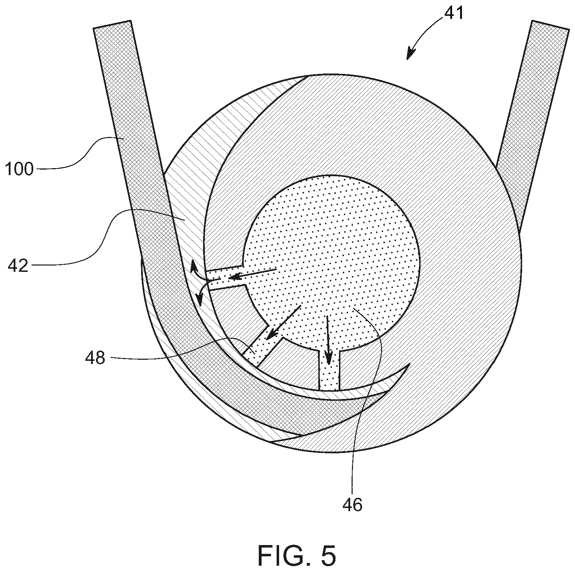

Über einen oder mehrere Zulaufanschlüsse 44 an einem Ende der Umlenkeinheit 40 kann eine Flüssigkeit in einen Innenraum 46 der Umlenkeinheit 40 gespeist werden. Durch die Bohrungen 48 im Gewinderillengrund der Gewindenut 42 kann die in den Innenraum 46 geleitete Flüssigkeit dann wieder austreten, was durch die Pfeile in den Figuren 4 und 5 angedeutet wird.

Die in Figur 4 dargestellte Ausführungsform zeigt die Umlenkeinheit 40 mit einem zweiteilig zusammengesetzten Hohlkörper. Der Hohlkörper umfasst die Gewindespindel 41 mit äußerer Gewindenut 42 und einen an die Gewindespindel 41 wasserdicht verbundenen Aufsatz 411 mit Zulaufanschlüssen 44. Durch die Zulaufanschlüsse 44 kann eine Flüssigkeit in den Innenraum 46 des Hohlkörpers der Umlenkeinheit 40 gespeist werden. Eine zusammensetzbare Umlenkeinheit birgt den Vorteil, dass ein einfacher Austausch verschiedener Gewindespindeln 41 auch ohne die Deinstallation der Pumpvorrichtung von den Zulaufanschlüssen ermöglicht wird und die Wartung erleichtert.

Durch mehrere spiralförmige Windungen der Gewindenut 42 kann ein mehrfaches Umlaufen der Membranfaser um die Gewindespindel 41 in der Gewindenut 42 realisiert werden. Somit kann die Verweilzeit im Spülbehälter 30 zusätzlich verlängert und infolgedessen eine verbesserte Spül- oder Imprägnierleistung erzielt werden ohne den Platzbedarf des Spülbehälters 30 zu erhöhen.

Eine regel- oder steuerbare Pumpvorrichtung für die Flüssigkeit (hier nicht näher dargestellt), ist am Zulaufanschluss 44 angeschlossen. Die Menge der durch die Bohrungen 48 strömenden Flüssigkeit kann auf diese Weise durch Vorgabe einer Pumpleistung der Pumpvorrichtung vorgegeben werden. Die Umlenkeinheit 40 wird also aktiv mit der Flüssigkeit (z. B. Wasser) durchspült. Dadurch wird die durch die Gewindenut 42 der Gewindespindel 41 geführte Membranfaser 100 aktiv durchspült/getränkt. Gleichzeitig bildet sich ein Film aus dem Spülmedium in der Gewindenut 42 der Gewindespindel 41 aus, auf dem die Membranfaser 100 während der Führung gleitet und welcher somit einen berührungsfreien Faserlauf ermöglicht.

Um diesen berührungsfreien Faserlauf und ein besseres Durchspülen der um die Umlenkeinheit 40 zu führenden Membranfaser 100 zu realisieren, kann die Gewindenut 42, angepasst an die Dicke und Beschaffenheit der Membranfaser 100, eine Gewindenutbreite von 30 µm bis 1 cm betragen. Zudem kann die Gewindenut 42 eine Gewindenuttiefe von 30 µm bis 1 cm aufweisen, um die Führung der Faser zu stabilisieren. Auch kann durch die Wahl der Art der Gewindenut 42 aus Spitzgewinde, Trapezgewinde, Flachgewinde, Sägegewinde und Rundgewinde, eine weitere Anpassung der Umlenkeinheit 40 an die Beschaffenheit der Membranfaser 100 erfolgen.

In einer weiteren Ausführungsform kann die hohle Gewindespindel 41 mindestens zwei Gewindenuten 42 mit jeweils unterschiedlichen Gewindenutbreiten und/oder Gewindenuttiefen aufweisen. Hierbei gehen die Gewindenuten 42 nicht in einander über. Somit können unterschiedliche Membranfasern mittels einer Gewindespindel 41 bearbeitet werden, ohne dass ein Austausch der Gewindespindel 41 aus der Umlenkeinheit vorgenommen werden muss. Ferner wird ein simultanes Umlenken und Durchspülen mehrerer Membranfaserstränge in jeweils separaten Gewindenuten 42 auf einer Umlenkeinheit ermöglicht.

Figur 5 zeigt einen Querschnitt der hohlen Gewindespindel 41 mit einer (spiralförmig verlaufenden) Gewindenut 42 und Bohrungen 48 im Gewinderillengrund der Gewindenut 42. Das durch Pfeile illustrierte Durchströmen einer Flüssigkeit durch den Innenraum 46 der Gewindespindel 41 und durch die Bohrungen 48 gewährleistet die Bildung eines Flüssigkeitsfilms in der Gewindenut 42. Die Membranfaser 100 wird beim Umlenk- und Spül-/Imprägniervorgang durch die Gewindenut 42 geführt und gleitet dabei auf dem Flüssigkeitsfilm.

Die Vorrichtung 10 ermöglicht somit die berührungslose Umlenkung der Membranfaser 100 im Rolle-zu-Rolle-Prozess auf einer feststehenden Umlenkeinheit 40 und ermöglicht gleichzeitig ein aktives Durchspülen der Membranfaser 100, um diese entweder zu reinigen oder zu imprägnieren. Das benötigte Volumen sowie die notwendige Kontaktzeit zum Spülen/Imprägnieren sind gegenüber herkömmlichen Verfahren erheblich reduziert. Das aktive Durchspülen ist zudem wesentlich effektiver als das bisher übliche passive Durchziehen durch ein Bad. Die berührungslose Umlenkung ermöglicht weiterhin eine schonende Führung von sehr empfindlichen/dünnen/wenig stabilen Fasermaterialien ohne aktiven Antrieb einer Umlenkrolle. Herkömmliche Anlagen nutzen hingegen beispielsweise aktiv angetriebene Rollen zum schonenden Mitführen von Bahnmaterialien. Zusätzlich sind dann erheblich längere Verweilzeiten (5- 10x) in den entsprechenden Spül-/Imprägnierbädern mit dadurch bedingt größeren Volumina (5 - 10x) der Bäder erforderlich, um brauchbare Resultate zu erzielen.

## Patentansprüche

1. Vorrichtung zum Spülen oder Imprägnieren einer Membranfaser (100), umfassend
- eine Umlenkeinheit (40), die eine hohle Gewindespindel (41) mit einer Gewindenut (42) umfasst, wobei die Gewindenut (42) mindestens eine Windung und Bohrungen (48) im Gewinderillengrund der Gewindenut (42) aufweist;
- Mittel zum Führen der Membranfaser (100) über die Gewindenut (42) der Umlenkeinheit (40), die eine erste Umlenkwalze (20) und eine zweite Umlenkwalze (22) umfassen, wobei die Umlenkeinheit (40) derart zwischen der ersten Umlenkwalze (20) und der zweiten Umlenkwalze (22) angeordnet ist, dass die Membranfaser (100) an der Umlenkeinheit (40) umlenkbar ist; und
- eine Pumpvorrichtung, die an einen Zulaufanschluss (44) an der Umlenkeinheit (40) angeschlossen ist und dazu ausgelegt ist, eine Flüssigkeit in die hohle Gewindespindel (41) und durch die Bohrungen (48) in der Gewindenut (42) zu leiten.

2. Vorrichtung nach Z Anspruch 1
wobei die Vorrichtung einen Spülbehälter (30) umfasst und wobei die Umlenkeinheit (40) in dem Spülbehälter (30) angeordnet ist.

3. Vorrichtung nach Anspruch 2, wobei die Umlenkeinheit (40) im Spülbehälter (30) lösbar montiert ist.

4. Vorrichtung nach einem der vorherigen Ansprüche, umfassend einen nach oben stehenden Griff (50), der an der Umlenkeinheit (40) montiert ist.

5. Vorrichtung nach einem der vorherigen Ansprüche, wobei die Gewindenut (42) eine Gewindenutbreite von 30 µm bis 1 cm aufweist.

6. Vorrichtung nach einem der vorherigen Ansprüche, wobei die Gewindenut (42) eine Gewindenuttiefe von 30 µm bis 1 cm aufweist.

7. Vorrichtung nach einem der vorherigen Ansprüche, wobei die Gewindenut (42) eine Gewindeart ausgewählt aus Spitzgewinde, Trapezgewinde, Flachgewinde, Sägegewinde und Rundgewinde ist.

8. Vorrichtung nach einem der vorherigen Ansprüche, wobei die hohle Gewindespindel (41) mindestens zwei Gewindenuten (42) mit jeweils unterschiedlichen Gewindenutbreiten und/oder Gewindenuttiefen aufweist.

9. Vorrichtung nach einem der vorherigen Ansprüche, wobei die Pumpvorrichtung regelbar ist.

## Claims

1. A device for washing or impregnating a membrane fibre (100), comprising
- a deflection unit (40) that comprises a hollow threaded spindle (41) with a threaded groove (42), wherein the threaded groove (42) has at least one turn and drilled holes (48) in the bottom of the threaded groove (42);
- a means of guiding the membrane fibre (100) over the threaded groove (42) of the deflection unit (40) that comprises a first deflection roller (20) and a second deflection roller (22), wherein the deflection unit (40) is arranged between the first deflection roller (20) and the second deflection roller (22) such that the membrane fibre (100) can be deflected on the deflection unit (40); and
- a pumping device that is connected to a feed connection (44) on the deflection unit (40) and designed to conduct a fluid into the hollow threaded spindle (41) and through the drilled holes (48) in the threaded groove (42).

2. A device according to Claim 1, wherein the device comprises a washing vessel (30), and wherein the deflection unit (40) is arranged in the washing vessel (30).

3. A device according to Claim 2, wherein the deflection unit (40) is detachably mounted in the washing vessel (30).

4. A device according to one of the preceding claims comprising an upright handle (50) that is mounted on the deflection unit (40).

5. A device according to one of the preceding claims, wherein the threaded groove (42) has a thread-groove width of 30 mm to 1 cm.

6. A device according to one of the preceding claims, wherein the threaded groove (42) has a thread-groove depth of 30 mm to 1 cm.

7. A device according to one of the preceding claims, wherein the threaded groove (42) is of a thread type selected from a V-thread, trapezoidal thread, flat thread, sawtooth thread and a round thread.

8. A device according to one of the preceding claims, wherein the hollow threaded spindle (41) has at least two threaded grooves (42), each having different thread-groove widths and/or thread-groove depths.

9. A device according to one of the preceding claims, whereby the pumping device can be regulated.

## Revendications

1. Dispositif de rinçage ou d'imprégnation d'une fibre à membrane (100), comprenant
- une unité de déviation (40) comprenant une broche filetée creuse (41) avec une gorge de filet (42), la gorge de filet (42) présentant au moins un enroulement et des alésages (48) dans le fond de la gorge de filet (42) ;
- des dispositifs pour guider la fibre à membrane (100) via la gorge de filet (42) de l'unité de déviation (40), lesquels dispositifs comprennent un premier rouleau de déviation (20) et un second rouleau de déviation (22), l'unité de déviation (40) étant disposée entre le premier rouleau de déviation (20) et le second rouleau de déviation (22) de sorte que la fibre à membrane (100) peut être déviée au niveau de l'unité de déviation (40) ; et
- un dispositif de pompage qui est relié à un raccordement d'entrée (44) sur l'unité de déviation (40) et qui est conçu pour envoyer un fluide dans la broche filetée creuse (41) et à travers les alésages (48) dans la gorge de filet (42).

2. Dispositif selon la revendication 1, dans lequel le dispositif comprend une cuve de rinçage (30), l'unité de déviation (40) étant disposée dans la cuve de rinçage (30).

3. Dispositif selon la revendication 2, dans lequel l'unité de déviation (40) est montée de manière amovible dans la cuve de rinçage (30).

4. Dispositif selon l'une des revendications précédentes, comprenant une poignée verticale (50) montée sur l'unité de déviation (40).

5. Dispositif selon l'une des revendications précédentes, dans lequel la gorge de filet (42) a une largeur de gorge de filet de 30 mm à 1 cm.

6. Dispositif selon l'une des revendications précédentes, dans lequel la gorge de filet (42) a une profondeur de gorge de filet de 30 mm à 1 cm.

7. Dispositif selon l'une des revendications précédentes, dans lequel la gorge de filet (42) est l'un des types de filetage parmi le filetage triangulaire, le filetage trapézoïdal, le filetage plat, le filetage en dents de scie et le filetage arrondi.

8. Dispositif selon l'une des revendications précédentes, dans lequel la broche filetée creuse (41) présente au moins deux gorges de filet (42) avec des largeurs de gorge de filet et/ou des profondeurs de gorge de filet respectivement différentes.

9. Dispositif selon l'une des revendications précédentes, dans lequel le dispositif de pompage peut être ajusté.
